# EUROPÄISCHE PATENTANMELDUNG

(11) **EP 4 640 597 A2**
(43) Veröffentlichungstag der Anmeldung: **29.10.2025**
(21) Anmeldenummer: 25171186.7
(22) Anmeldetag: 17.04.2025
(51) Int. Cl.: B65G 45/16

(54) **FÖRDERBANDABSTREIFER**

(30) Priorität: 22.04.2024 DE 102024111230
(71) Anmelder: Stadler Anlagenbau GmbH, 88361 Altshausen (DE)
(72) Erfinder: Birkle, Mario, 88348 Bad Saulgau - Großtissen (DE)
(74) Vertreter: RavensPAT Patentanwälte Partnerschaft mbB

(57) **Zusammenfassung**

Förderbandabstreifer 1 für einen Förderer mit Gurtband, der Förderbandabstreifer 1 umfassend: eine Trägerleiste 2, wobei die Trägerleiste 2 quer zu der Laufrichtung des Gurtbandes 3 angeordnet ist, ein Haltemittel 4 zur Befestigung und/oder Lagerung der Trägerleiste 2 an dem Förderer, wobei das Haltemittel 4 zur Lagerung der Trägerleiste 2 wenigstens eine erste Lagerstelle 5 und wenigstens eine zweite Lagerstelle 6 umfasst, einen Schaber 7, wobei der Schaber 7 an der Trägerleiste 2 angeordnet ist, wobei der Schaber 7 quer zu der Laufrichtung des Gurtbandes 3 verläuft, wobei der Schaber 7 an einer Lagerachse 8 federnd gelagert ist, wobei die Lagerachse (8) an der Trägerleiste 2 angeordnet ist, wobei der Schaber 7 in einer Betriebsposition, insbesondere zur Entkopplung des Schabers 7 von dem Gurtband, bevorzugt mittels einer von einem Federelement 9 bereit gestellten Federkraft, federnd an das Gurtband angedrückt ist, wobei die Lagerstellen 5, 6 eine parallel zu der Trägerleiste 2 verlaufende Schwenkachse 10 bilden, wobei die Trägerleiste 2 um die Schwenkachse 10 derart schwenkbar ist, sodass der Schaber 7 in einer Reinigungsposition außer Eingriff mit dem Gurtband steht.

## Beschreibung

Die vorliegende Erfindung betrifft das technische Gebiet der Förderbandabstreifer für Förderer mit Gurtband.

Technische Aufgabe der Erfindung ist es den Stand der Technik zu verbessern und/oder Alternativen hierzu anzubieten.

Die technische Aufgabe der Erfindung wird durch einen Gegenstand mit den technischen Merkmalen nach den unabhängigen Ansprüchen gelöst. Vorteilhafte Ausführungsformen sind Gegenstand der abhängigen Ansprüche, der Beschreibung und der Zeichnungen.

Alle in Verbindung mit einzelnen Ausführungsformen der Erfindung erläuternde Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Patentansprüche gegeben und wird durch die in der Beschreibung erläuterten oder den Figuren dargestellten Merkmale nicht beschränkt.

Im Sinne der Erfindung sind die Begriffe Anklappen und Anstellen einerseits, sowie die Begriffe Abklappen und Abstellen andererseits als jeweils gleichbedeutend aufzufassen. Unter Anklappen oder Anstellen ist ein in Verbindung bringen, insbesondere ein in Wirkeingriff bringen, zu verstehen. Analog ist unter einem Abklappen oder Abstellen ein außer Verbindung bringen, insbesondere ein außer Wirkeingriff bringen, zu verstehen.

Weiterhin kann unter dem Begriff des Verschwenkens ein Abklappen des Schabers von dem Gurtband weg, oder ein Anklappen an das Gurtband hin, oder ein Bewegen zwischen der Betriebsposition und der Reinigungsposition verstanden werden.

Weiterhin ist im Sinne der Erfindung insbesondere unter dem Begriff Rieselgut beispielsweise ein von einem Gurtband oder Förderband mittels eines Schabers abgetragenes Material, aber auch weiteres und ansonsten von dem Gurtband oder Förderband herabfallendes Material zu verstehen.

Unter dem Begriff quer zur Laufrichtung kann im Sinne der Erfindung auch ein von 90° verschiedener Winkel zur Laufrichtung des Gurtbandes verstanden werden, der technisch sinnvoll ist.

Darüber hinaus ist im Sinne der Erfindung unter einer ersten Seite des Förderers auch eine erste Seite des Förderbandabstreifers zu verstehen. Analoges gilt für eine zweite Seite des Förderers.

Gemäß einem Aspekt wird die technische Aufgabe der Erfindung gelöst durch einen Förderbandabstreifer für einen Förderer mit Gurtband, der Förderbandabstreifer umfassend: eine Trägerleiste, wobei die Trägerleiste quer zu der Laufrichtung des Gurtbandes angeordnet ist, ein Haltemittel zur Befestigung der Trägerleiste an dem Förderer, wobei das Haltemittel zur Lagerung der Trägerleiste wenigstens eine erste Lagerstelle und wenigstens eine zweite Lagerstelle umfasst, einen Schaber, wobei der Schaber an der Trägerleiste angeordnet ist, wobei der Schaber quer zu der Laufrichtung des Gurtbandes verläuft, wobei der Schaber an einer Lagerachse federnd gelagert ist, wobei die Lagerachse an der Trägerleiste angeordnet ist, wobei der Schaber in einer Betriebsposition, insbesondere zur Entkopplung des Schabers von dem Gurtband, bevorzugt mittels einer von wenigstens einem Federelement bereit gestellten Federkraft, federnd an das Gurtband angedrückt ist, wobei die Lagerstellen eine parallel zu der Trägerleiste verlaufende Schwenkachse bilden, wobei die Trägerleiste um die Schwenkachse derart schwenkbar ist, sodass der Schaber in einer Reinigungsposition außer Eingriff mit dem Gurtband steht.

Der Förderbandabstreifer kann beispielsweise für Förderbänder mit glatten Gurtbändern und/oder beispielsweise als ein Sekundärabstreifer ausgebildet sein. Beispielsweise aufbauende und/oder zuckerhaltige Schmutzschichten, die sich während des Betriebs auf dem Gurtband, insbesondere auf einem Gurtband von Förderern zur Mülltrennung, ansammeln, können so von dem Gurtband entfernt werden. Insbesondere kann vorgesehen sein, dass das Haltemittel zweiteilig an beiden Enden der Trägerleiste ausgebildet ist. Das Haltemittel kann dabei beispielsweise als eine Trägerstruktur, oder als eine Befestigungsmöglichkeit ausgebildet sein, die beispielsweise als verbindendes Element die Trägerleiste an dem Förderer, insbesondere lösbar, ermöglicht.

Vorteilhaft können so eine Abstreifleistung und eine Abstreifwirkung dahingehend verbessert werden, als dass eine Reinigung des Förderbandabstreifers mit nur geringem Zeitaufwand oder kleinem Arbeitsaufwand ermöglicht werden kann. Ein Bediener und/oder insbesondere ungeschultes Personal, kann den Schaber und/oder den Abstreifer einfach und schnell an- oder abklappen, was den Reinigungsvorgang vereinfacht und ihn schneller gestalten kann. Hierdurch kann vorteilhaft ein Anlagenstillstand zur Reinigung vermieden und ein schnelles Abklappen hierzu während des Betriebs ermöglicht werden.

In einer vorteilhaften Ausführungsform ist vorgesehen, dass das Haltemittel ein erstes Haltemittelelement, sowie ein zweites Haltemittelelement umfasst, wobei das erste Haltemittelelement die erste Lagerstelle ausbildet und das zweite Haltemittelelement die zweite Lagerstelle ausbildet, wobei das erste Haltemittelelement an einer ersten Seite des Förderers montierbar ausgebildet ist und das zweite Haltemittelelement an einer zweiten Seite des Förderers montierbar ausgebildet ist.

Beispielsweise kann vorgesehen sein, dass die Trägerleiste mittels eines einteiligen Haltemittels an dem Förderer befestigt ist und das Haltemittel eine erste Lagerstelle und/oder eine zweite Lagerstelle ausbildet. Auch kann beispielsweise vorgesehen sein, dass das Haltemittel zwei- oder mehrteilig ausgebildet ist und somit ein jedes Haltemittelelement eine jeweilige Lagerstelle ausbildet.

Vorteilhaft können so eine einfache Konstruktion und Herstellung ermöglicht und eine größere Flexibilität hierbei geschaffen werden.

In einer weiteren vorteilhaften Ausführungsform ist vorgesehen, dass der Schaber eine Schaberaufnahme umfasst und die Trägerleiste eine Federelementaufnahme umfasst, wobei die Schaberaufnahme mittels des Federelements beweglich und/oder gefedert an der Federelementaufnahme angeordnet ist.

Vorteilhaft kann so eine stabile Konstruktion ermöglicht werden und ein präzises Anliegen des Schabers an dem Gurtband ermöglicht werden.

Darüber hinaus ist in einer vorteilhaften Ausführungsform vorgesehen, dass der Schaber, insbesondere in Reinigungsposition und/oder in Betriebsposition, bevorzugt mittels einer Arretierungsvorrichtung, arretierbar ausgebildet ist, wobei insbesondere die Arretierungsvorrichtung mittels eines, bevorzugt werkzeuglos zu bedienenden, Bedienelements, insbesondere eines Riegelbolzens, zu öffnen und/oder zu schließen ist.

Hierdurch kann vorteilhaft die Wartungs- und Reinigungszugänglichkeit zusätzlich vereinfacht werden. Auch vereinfacht dies vorteilhaft den Wartungs- und Reinigungsaufwand, da auf spezielle Werkzeuge und/oder geschultes Personal verzichtet werden kann. Auch kann beispielsweise vorgesehen sein, dass der Schaber mittels des Bedienelements in einer Zwischenposition arretierbar ausgebildet ist, wobei eine solche Zwischenposition auch eine Reinigungsposition sein kann.

Weiterhin ist in einer vorteilhaften Ausführungsform vorgesehen, dass die Lagerachse und die Schwenkachse, insbesondere horizontal und/oder vertikal, zueinander beabstandet ausgebildet sind.

Hierdurch kann zusätzlich eine größere Flexibilität bei der Konstruktion ermöglicht werden. Darüber hinaus können bei der Konstruktion besondere Anforderungen, beispielsweise hinsichtlich der Anforderung besonderer Hebelkräfte oder Wirkrichtungen oder Anstellwinkel des Schabers berücksichtigt werden.

Außerdem ist in einer vorteilhaften Ausführungsform vorgesehen, dass wenigstens eine Lagerstelle eine Verstell-Einheit aufweist, wobei der Schaber, insbesondere stufenlos, mittels der Verstell-Einheit, bevorzugt zwischen der Betriebsposition und der Reinigungsposition, verschwenkbar ist, wobei die Verstell-Einheit manuell oder automatisch, insbesondere mechanisch und/oder pneumatisch und/oder elektro-mechanisch, ausgebildet ist und wobei die Verstell-Einheit insbesondere die Arretierungsvorrichtung umfasst, wobei die Verstell-Einheit insbesondere außerhalb des Förderers angeordnet ist.

Beispielsweise kann das stufenlose Verschwenken mittels einer Gewindestange vorgesehen sein. Die Verstell-Einheit ermöglicht, insbesondere ausschließlich, ein Abstellen und ein Anstellen des Schabers an das Gurtband des Förderers, was vorteilhaft eine Feinjustage, wie beispielsweise mittels Nachmessens einer gewünschten Betriebsposition oder Anstell-Position des Schabers erübrigt. Vorteilhaft kann dadurch die gesamte Bedienbarkeit von außen, also von außerhalb des Förderers, über die Verstell-Einheit ermöglicht werden. Das Gewicht des Abstreifers kann somit vorteilhaft beispielsweise auf wenigstens nur einem Drehpunkt belassen werden. Dies kann vorteilhaft eine körperliche Schonung eines Bedieners, beispielsweise beim Ausbau des Abstreifers, ermöglichen. Durch beispielsweise ein einseitiges Anklappen des Abstreifers, insbesondere über einen solchen Drehpunkt, kann beidseitiges Anstellen vermieden und ein zusätzlicher Zeit- und Arbeitsaufwand verringert werden.

Beispielsweise kann vorgesehen sein, dass der Schaber auch über die Reinigungsposition hinaus verschwenkt werden kann. Weiterhin kann vorgesehen sein, dass der Schaber über die Reinigungsposition hinaus, insbesondere wenn der Schaber nicht in der Reinigungsposition arretiert ist, lediglich in den Schaberlagerstellen und durch die Schwerkraft nach unten hängt.

Die kann einen ungehinderten Zugang zu sämtlichen Elementen des Förderbandabstreifers ermöglichen und den Wartungs- und Reinigungsaufwand verringern.

Weiterhin ist in einer vorteilhaften Ausführungsform vorgesehen, dass der Schaber in einem Kontaktbereich zwischen dem Schaber und dem Gurtband eine einteilige und/oder durchgängige und/oder austauschbare, insbesondere verschleißarme, bevorzugt verschleißfreie, Abstreiferklinge aufweist.

Vorteilhaft kann so ermöglicht sein, dass beispielsweise im Fall von Verunreinigungen oder Unebenheiten auf dem Gurtband, der Schaber mittels des Federelements gemeinsam den Verunreinigungen oder Unebenheiten ausweichen kann und dadurch etwaige Beschädigungen, insbesondere an Gurtband und/oder Abstreiferklinge und/oder Schaber, vermieden werden können. Beispielsweise kann das Federelement aus einer Mehrzahl von Gummipuffern ausgebildet sein, die zueinander segmentiert angeordnet das oder die Federelemente bilden. Auch können mehrere einzelne Federelemente vorgesehen sein, die insbesondere jeweils segmentiert, bevorzugt jeweils mit einzelnen Gummipuffern, ausgebildet sind.

Außerdem ist in einer vorteilhaften Ausführungsform vorgesehen, dass der Schaber eine, insbesondere gewölbte und/oder geknickte, bevorzugt oberhalb der Trägerleiste angeordnete, Abdeckung umfasst, wobei die Abdeckung dazu ausgebildet ist, den Förderbandabstreifer, zumindest teilweise, insbesondere vollständig, gegenüber von dem Gurtband herabfallenden Rieselgut abzuschirmen.

Vorteilhaft kann so ein Ansammeln von Rieselgut im Bereich des Förderbandabstreifers verhindert werden und das abgetragene Material aus dem Bereich des Förderbandabstreifers entfernt werden. Die Abdeckung kann beispielsweise als Abdeckblech oder als Abdeckplatte ausgebildet sein und insbesondere aus einem zumindest anteilig ein Metall und/oder zumindest anteilig einem Kunststoff umfassendes Material ausgebildet sein. Vorteilhaft kann so das Eindringen von Rieselgut, oder im Fall eines Förderers zur Mülltrennung von Abfallmaterial, verhindert werden, was zusätzlichen Wartungsaufwand vermeiden kann.

Weiterhin ist in einer vorteilhaften Ausführungsform vorgesehen, dass der Schaber eine Schaberbreite zwischen 500 mm und 3100 mm, insbesondere zwischen 600 mm und 3000 mm, aufweist und/oder der Schaber zu der Lagerachse beabstandet ist.

Hierdurch können bei der Konstruktion vorteilhaft auf gängige Breiten von Gurtbändern berücksichtigt werden und eine größere Flexibilität auch bei dem Einsatz der Vorrichtung ermöglicht werden.

Darüber hinaus ist in einer vorteilhaften Ausführungsform vorgesehen, dass der Förderbandabstreifer, insbesondere im Bereich des Schabers, bevorzugt im Bereich der Abdeckung, eine Rieselgutentfernung, insbesondere eine mechanische Rieselgutentfernung und/oder eine Rieselgutentfernung mittels Druckluft, bevorzugt ein Druckluftsystem zum Ausblasen des Bereichs zwischen Schaber und Gurtband aufweist.

Vorteilhaft kann so zusätzlich der Reinigungs- und Wartungsaufwand verringert werden. Vorteilhaft fällt das Rieselgut oder das Abfallmaterial nicht unkontrolliert über die gesamte Fördererlänge ab.

Außerdem ist in einer vorteilhaften Ausführungsform vorgesehen, dass die Elemente des Förderbandabstreifers, insbesondere der Schaber, die Trägerleiste, das Haltemittel, die Abdeckung, die Abstreiferklinge, voneinander, insbesondere mittels Schraubverbindungen, lösbar und/oder modular zueinander, ausgebildet sind.

Vorteilhaft kann so ein einfacher Austausch der Elemente, insbesondere der besagten Elemente, ermöglicht werden und somit eine einfache Wartung mit längeren Laufzeiten geschaffen werden.

Weiterhin ist in einer vorteilhaften Ausführungsform vorgesehen, dass das Federelement zur Bereitstellung einer insbesondere variablen, bevorzugt mittels einer segmentierten Anordnung des Federelements, mittels des Schabers in Betriebsposition auf das Gurtband wirkenden Vorspannung ausgebildet sind, wobei bevorzugt die Vorspannung mittels stufenloser Verstellung der Verstell-Einheit einstellbar ist, wobei insbesondere die Vorspannung bei einer Auslenkung des Schabers von 5° aus einer Ausgangslage, insbesondere in die Betriebsposition, ein Anpressgewicht von bevorzugt 10 kg je Meter der Schaberbreite beträgt.

Darüber hinaus kann das Federelement beispielsweise als ein Torsionselement oder als elastisches Blockstück, insbesondere aus Gummi, oder als Torsionsfeder oder als eine Knickfeder ausgebildet sein, wobei die Elastizität insbesondere die federnde Rückstellkraft erzeugt.

Vorteilhaft können so die Abstreifleistung und die Abstreifwirkung zusätzlich verbessert werden und Beschädigungen, insbesondere des Gurtbandes, können vermieden werden. Darüber hinaus wird so eine flexiblere Konstruktion ermöglicht, die etwaige gegebene Anforderungen bestmöglich berücksichtigen kann.

Darüber hinaus ist in einer vorteilhaften Ausführungsform vorgesehen, dass das Federelement durchgängig, insbesondere mit einer Längsausdehnung quer zur Laufrichtung des Gurtbandes, ausgebildet ist, wobei insbesondere das Federelement segmentiert zueinander angeordnet ist.

Vorteilhaft ist insbesondere vorgesehen, dass das Federelement für sich mit einer Längsausdehnung quer zur Laufrichtung des Gurtbandes, sein kann. Beispielsweise kann das Federelement gemeinsam ein strukturell übergeordnetes Federelement bilden, das seinerseits, auf Grund der einzelnen ihn bildenden Federelemente, segmentiert ausgebildet ist. Dies kann zusätzlich eine einfachere Konstruktion und Wartung ermöglichen und den Betrieb zuverlässiger gestalten.

Weiterhin ist in einer vorteilhaften Ausführungsform vorgesehen, dass eine Bedienung des Förderbandabstreifers und/oder eine Installation des Förderbandabstreifers, insbesondere ein Anklappen des Schabers von der Reinigungsposition in die Betriebsposition, oder ein Abklappen des Schabers von der Betriebsposition in die Reinigungsposition, oder eine Verstellung der Verstell-Einheit, von nur einer Seite des Förderers ermöglicht ist und insbesondere die Arretierungsvorrichtung und/oder die Verstell-Einheit an nur einer Seite des Förderbandabstreifers ausgebildet ist, wobei insbesondere die Bedienung des Förderbandabstreifers bis zu einer Gurtbreite von 2000 mm, bevorzugt bis zu einer Gurtbreite von 2400 mm, ermöglicht ist.

Hierdurch kann zusätzlich die Bedienbarkeit verbessert werden und ein flexiblerer Einsatz ermöglicht. Insbesondere kann das An- und Abklappen von nur einer Seite eine größere Flexibilität beim Einsatz des Abstreifers ermöglichen, da dieser nicht beidseitig bedient werden muss und somit eine schnellere Wartung und/oder Bedienung ermöglicht werden kann.

Gemäß einem weiteren Aspekt wird die technische Aufgabe der Erfindung gelöst durch eine Förderanlage umfassend, ein Gurtband, zumindest eine sich um eine Trommelachse drehende Gurttrommel, sowie einen Förderbandabstreifer nach einem der vorausgehenden Ansprüche.

Vorteilhaft können die vorausgehend genannten Vorteile auch bei einer Förderanlage zum Tragen kommen.

In einer technisch vorteilhaften Ausführungsform der Förderanlage ist vorgesehen, dass der Schaber und die Trommelachse einen horizontalen Abstand zueinander aufweisen, der dem Radius der Gurttrommel entspricht.

Vorteilhaft kann dies zusätzlich eine flexiblere Konstruktion ermöglichen.

In einer weiteren technisch vorteilhaften Ausführungsform der Förderanlage ist vorgesehen, dass ein Betrieb der Förderanlage mit einer Geschwindigkeit von bis zu 4 m/s, insbesondere bis zu 6 m/s, und/oder bevorzugt ein Einsatz der Förderanlage in einem Temperaturbereich zwischen -40 °C und +80 °C ermöglicht ist/sind.

Vorteilhaft wird kann hierdurch ein breiterer Einsatz geschaffen werden.

Gemäß einem weiteren Aspekt wird die technische Aufgabe der Erfindung gelöst durch ein Verfahren zur Reinigung eines Förderbandabstreifers, insbesondere eines Förderbandabstreifers nach einem der vorangehenden Ansprüche, wobei mittels eines manuellen Auslösens und/oder einem definiertem Zeitintervall und/oder einer Sensorik ein auf einer Verunreinigung des Förderbandabstreifers basierender Betriebszustand des Förderers detektiert wird und mittels einer Steuerungselektronik ein, insbesondere von Druckluftsystemen gestützter, Reinigungsprozess des Förderbandabstreifers initiiert wird, wobei bevorzugt ein Schaber automatisiert, insbesondere mittels einer automatischen Verstell-Einheit, von einer Betriebsposition in eine Reinigungsposition, insbesondere eine Position entfernt von dem Gurtband, verschwenkt, insbesondere von dem Förderer abgeschwenkt, wird, wobei Verunreinigungen und/oder Materialanhaftungen am Gurtband insbesondere in einer

Reinigungsposition mittels Druckluft und/oder mechanisch gelöst werden

In anderen Worten ist vorgesehen, dass die Verstell-Einheit zum automatischen Abschwenken des Abstreifers von dem Gurtband des Förderers ausgebildet ist. Es ist vorgesehen, dass Verunreinigungen oder Materialanhaftungen am Gurtband insbesondere in einer Reinigungsposition mittels Druckluft oder mechanisch gelöst werden. Mittels manuellen Auslösens, oder nach einem bestimmten Zeitintervall oder in Folge eines Auslösens einer Sensorik wird ein Abschwenkprozess des Förderbandabstreifers initiiert, infolge dessen der Förderbandabstreifers von dem Gurtband abgeschwenkt wird und die Reinigung des Förderbandabstreifers ermöglicht werden kann.

Vorteilhaft kann mittels einer automatischen Reinigung Wartungspersonal, sowie Wartungsintervalle deutlich verringert und Kosten im Betrieb des Förderers eingespart werden.

Ausführungsbeispiele der Erfindung sind in den Figuren dargestellt und werden im Folgenden näher beschrieben.

Es zeigen:
- Fig. 1: eine perspektivische Ansicht eines Förderbandabstreifers;
- Fig. 2: eine weitere perspektivische Ansicht des Förderbandabstreifers;
- Fig. 3: eine Schnittzeichnung einer vertikal und in Laufrichtung eines Gurtbandes liegenden Ebene;
- Fig. 4: eine Seitenansicht in einer ersten Position;
- Fig. 5: eine Seitenansicht in einer zweiten Position;
- Fig. 6: eine Seitenansicht in einer dritten Position;
- Fig. 7: eine Seitenansicht in einer vierten Position; sowie
- Fig. 8: eine weitere Schnittzeichnung einer vertikal und in Laufrichtung eines Gurtbandes liegenden Ebene.
In einer Zusammenschau aller Figuren ist das Folgende dargestellt, wobei gleiche Elemente gleiche Bezugszeichen tragen:
Ein Förderbandabstreifer 1 für einen Förderer mit Gurtband, der Förderbandabstreifer 1 umfassend eine Trägerleiste 2, wobei die Trägerleiste 2 quer zu der Laufrichtung des Gurtbandes 3 angeordnet ist, ein Haltemittel 4 zur Befestigung und Lagerung der Trägerleiste an dem Förderer, wobei das Haltemittel 4 zur Lagerung der Trägerleiste eine erste Lagerstelle 5 und eine zweite Lagerstelle 6 umfasst, einen Schaber 7, wobei der Schaber 7 an der Trägerleiste 2 angeordnet ist, wobei der Schaber 7 quer zu der Laufrichtung des Gurtbandes 3 verläuft, wobei der Schaber 7 an einer Lagerachse 8 federnd gelagert ist, wobei die Lagerachse 8 an der Trägerleiste 2 angeordnet ist, wobei der Schaber 7 in einer Betriebsposition, zur Entkopplung des Schabers 7 von dem Gurtband, mittels einer von einem Federelement 9 bereit gestellten Federkraft federnd an das Gurtband angedrückt ist, wobei die Lagerstellen 5, 6 eine parallel zu der Trägerleiste 2 verlaufende Schwenkachse 10 bilden, wobei die Trägerleiste 2 um die Schwenkachse 10 derart schwenkbar ist, sodass der Schaber 7 in einer Reinigungsposition außer Eingriff mit dem Gurtband steht.

Vorteilhaft kann hierdurch ein einfaches und schnelles Abklappen des Schabers weg von dem Gurtband und beispielsweise in eine Reinigungsposition ermöglicht werden. Hierdurch kann sich im Betrieb ansammelndes Rieselgut und Verschmutzungen mit geringem Wartungsaufwand entfernt werden und auch im laufenden Betrieb erfolgen, wodurch Ausfallzeiten des Förderers minimiert werden können.

Die Elemente des Förderbandabstreifers, also zumindest der Schaber 7, die Trägerleiste 2, das Haltemittel 4, die Abdeckung 23, die Abstreiferklinge 22, voneinander, mittels Schraubverbindungen 25, lösbar und modular zueinander ausgebildet. Dies ermöglicht vorteilhaft zusätzlich eine schnelle Wartung und flexible Anpassungsmöglichkeiten an etwaige und gegebene Einbauumstände.

Eine Lagerstelle 5 weist eine Verstell-Einheit 20 auf, wobei der Schaber 7 stufenlos, mittels der Verstell-Einheit 20, zwischen der Betriebsposition und der Reinigungsposition, insbesondere über eine Zwischenposition hinweg, verschwenkbar ist.

Die Verstell-Einheit 20 ist manuell und mechanisch ausgebildet und umfasst eine Arretierungsvorrichtung 17, wobei die Verstell-Einheit 20 außerhalb des Förderers angeordnet ist.

Das Haltemittel 4 umfasst ein erstes Haltemittelelement 11, sowie ein zweites Haltemittelelement 12, wobei das erste Haltemittelelement 11 die erste Lagerstelle 5 ausbildet und das zweite Haltemittelelement 12 die zweite Lagerstelle 6 ausbildet. Das erste Haltemittelelement 11 ist an einer ersten Seite des Förderers 13 montierbar ausgebildet und das zweite Haltemittelelement 12 ist an einer zweiten Seite des Förderers 14 montierbar ausgebildet. Hierdurch kann vorteilhaft eine stabile Montage, sowie eine zügige Installation des Förderbandabstreifers 1, beispielsweise additiv und insbesondere an einem bereits bestehenden Förderer ermöglicht werden.

Der Schaber 7 ist in Reinigungsposition und in Betriebsposition, mittels einer Arretierungsvorrichtung 17 arretierbar ausgebildet, wobei die Arretierungsvorrichtung 17 mittels eines werkzeuglos zu bedienenden Bedienelements 18 und mittels eines Riegelbolzens 19 zu öffnen und zu schließen ist. Vorteilhaft kann so auch ungeschultes Personal zügig eine Bedienung und Reinigung des Förderbandabstreifers vornehmen, was sowohl Arbeitsaufwand, als auch Arbeitskosten minimieren kann.

Weiterhin weist der Schaber 7 in einem Kontaktbereich 21 zwischen dem Schaber 7 und dem Gurtband eine einteilige und durchgängige und austauschbare Abstreiferklinge 22 auf, wobei der Schaber 7 zu der Lagerachse 8 beabstandet ist. Der Schaber 7 umfasst darüber hinaus eine geknickte, oberhalb der Trägerleiste 2 angeordnete Abdeckung 23, wobei die Abdeckung 23 dazu ausgebildet ist, den Förderbandabstreifer 1 zumindest teilweise gegenüber von dem Gurtband herabfallenden Rieselgut abzuschirmen.

Der Schaber 7 umfasst eine Schaberaufnahme 15 und die Trägerleiste 2 umfasst eine Federelementaufnahme 16, wobei die Schaberaufnahme 15 mittels des Federelements 9 beweglich und/oder gefedert an der Federelementaufnahme 16 angeordnet ist. Vorteilhaft kann so ein schneller Austausch, ein schnelles und präzises An- und Abklappen, bei möglichst sicherer Befestigung ermöglicht werden.

Das Federelement 9 sind mittels segmentierter Anordnung, als auch mittels des Schabers 7 in Betriebsposition zur Bereitstellung einer auf das Gurtband wirkenden Vorspannung ausgebildet. Die Vorspannung ist mittels stufenloser Verstellung der Verstell-Einheit 20 einstellbar. Das Federelement 9 ist durchgängig, mit einer Längsausdehnung quer zur Laufrichtung des Gurtbandes 3, ausgebildet, wobei das Federelement 9 segmentiert zueinander angeordnet sind. Exemplarisch ist das Federelement mittels Gummipuffer dargestellt.

Die Arretierungsvorrichtung 17 und die Verstell-Einheit 20 sind an nur einer der beiden Seiten 13, 14 des Förderbandabstreifers 1 ausgebildet. Eine Bedienung des Förderbandabstreifers 1 und eine Installation des Förderbandabstreifers 1, sowie ein Anklappen des Schabers 7 von der Reinigungsposition in die Betriebsposition, oder ein Abklappen des Schabers 7 von der Betriebsposition in die Reinigungsposition, oder eine Verstellung der Verstell-Einheit 20, ist von nur einer der beiden Seiten 13, 14 des Förderers ermöglicht.

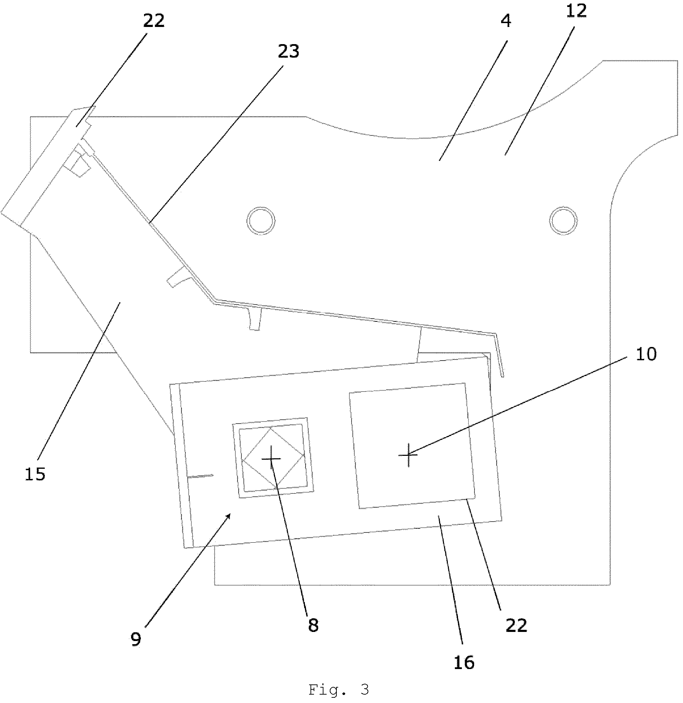

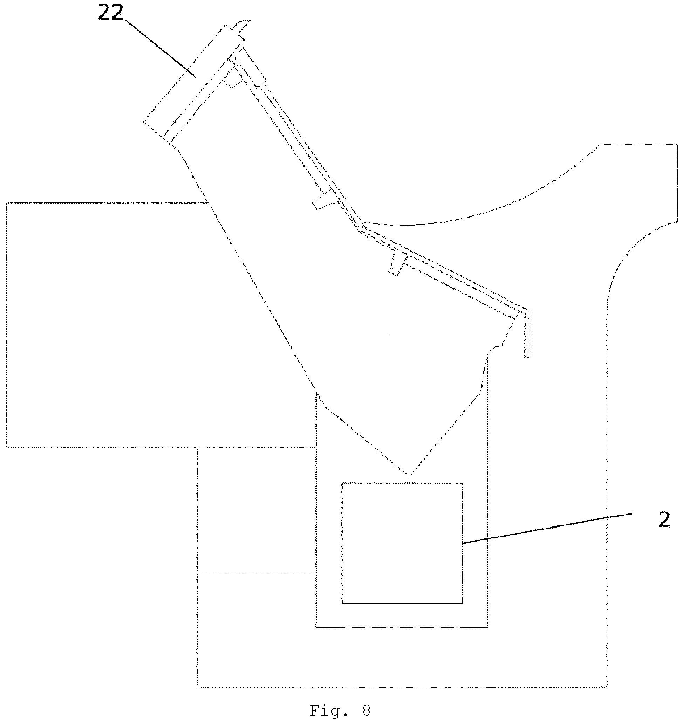

Die Lagerachse 8 und die Schwenkachse 10, sind in der Figur 3 horizontal zueinander beabstandet ausgebildet, wobei auch eine vertikale Beabstandung zueinander vorgesehen sein kann, wie sie in Figur 8 dargestellt ist.

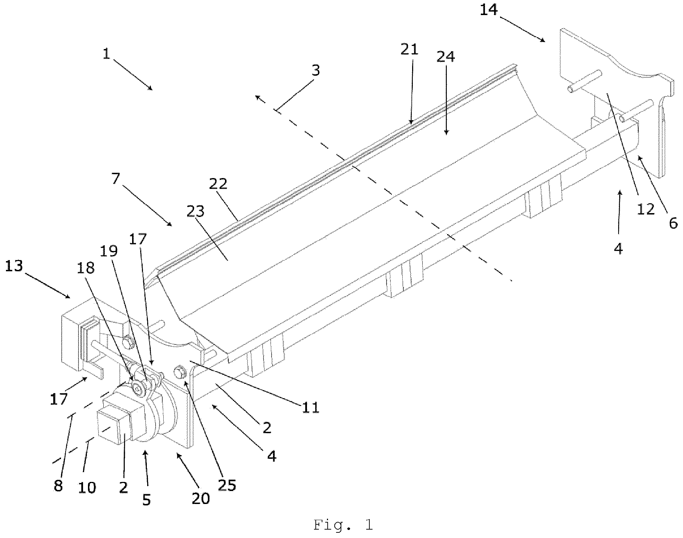

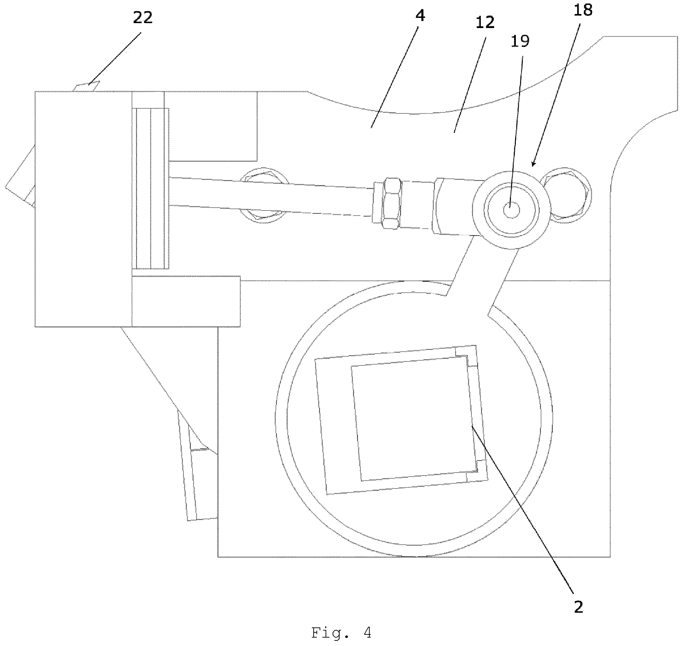

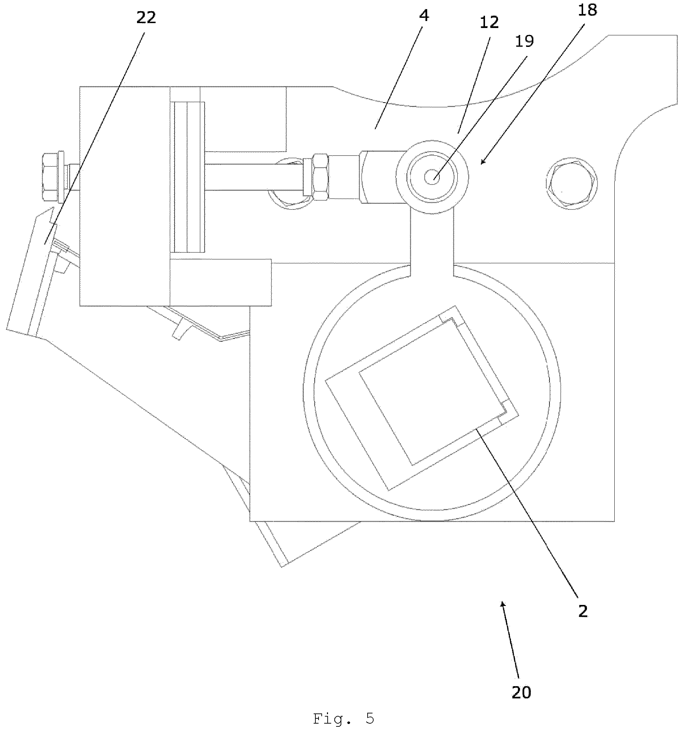

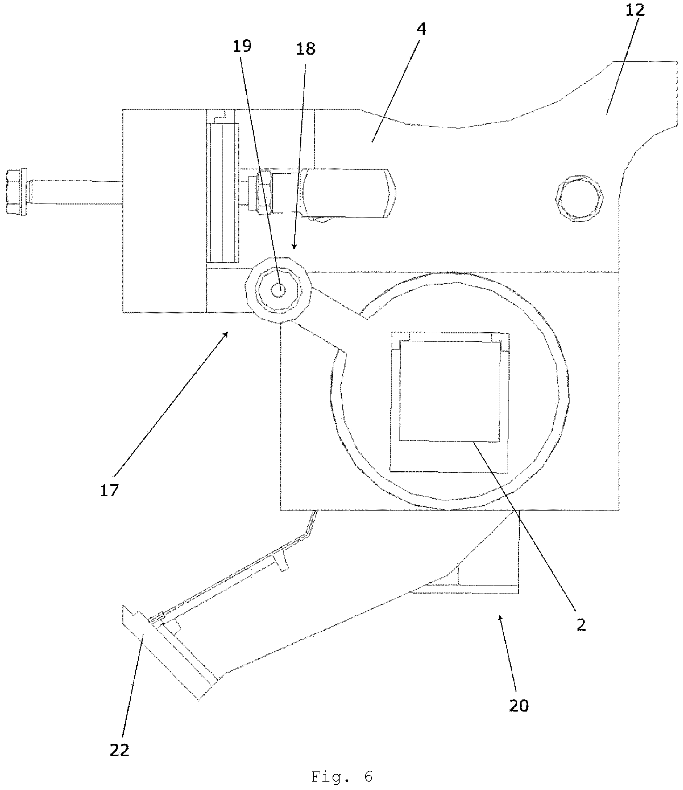

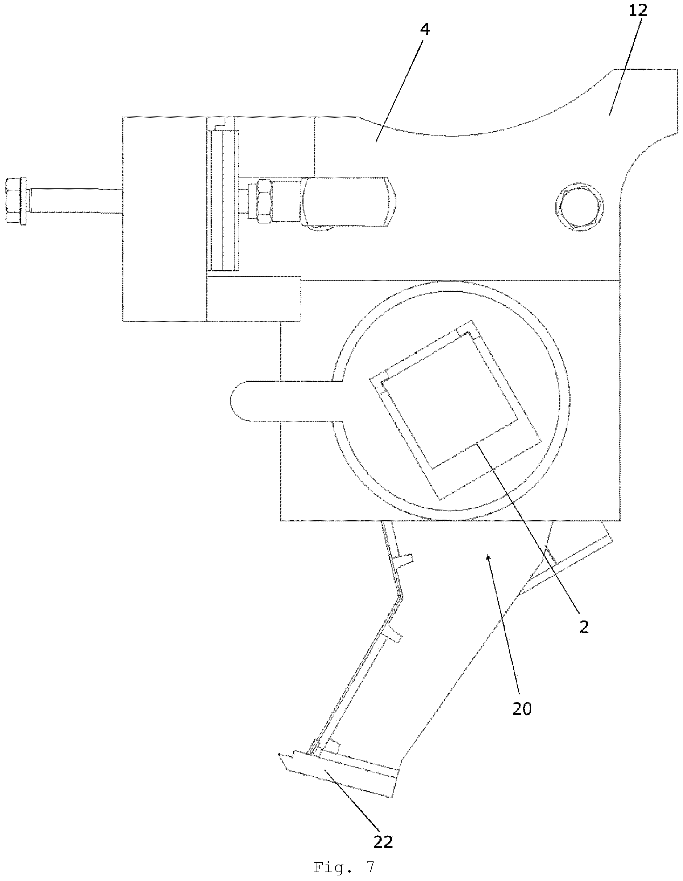

Die Figuren 1, 2, 3 und 4 zeigen den Förderbandabstreifer 1 in einer Betriebsposition mit angeklapptem Schaber. Im Vergleich hierzu zeigt die Figur 5 in einer Zusammenschau mit Figur 4, wie die Betriebsposition des Schabers mittels Verstellung der Verstell-Einheit, und mittels einer Schraube, oder Gewindestange, stufenlos justiert werden kann. Die Figur 6 zeigt im Vergleich hierzu eine Reinigungsposition in der der Schaber abgeklappt und mittels der Arretierungsvorrichtung 17 arretiert ist. Wiederum im Vergleich dazu ist in Figur 7 eine Reinigungsposition dargestellt in der der Schaber frei und nur durch die Schwerkraft nach unten hängend dargestellt ist.

In anderen Worten zeigt jede der Figuren 1, 2, 3 und 4 eine Betriebsposition, die Figur 5 eine Zwischenposition, die Figur 6 eine Reinigungsposition und die Figur 7 eine Schwerkraftposition.

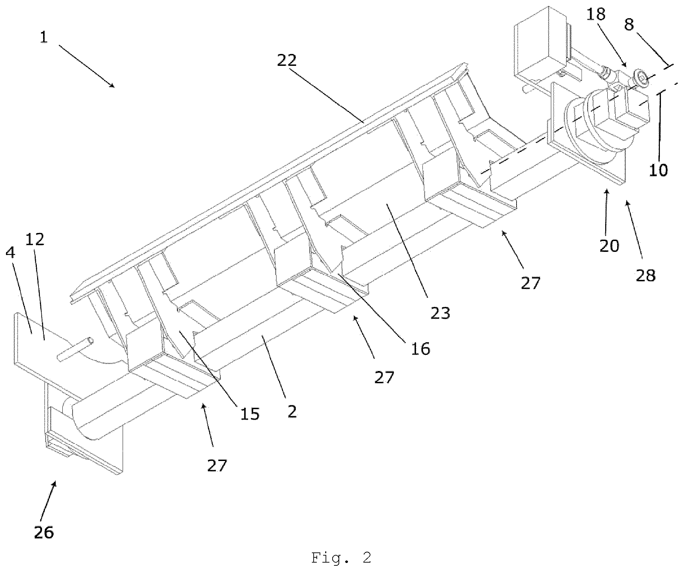

Zusätzlich ist in Figur 2 dargestellt, dass in den mit den Bezugszeichen 26 und 28 bezeichneten Bereichen bevorzugt starre Aufnahmen vorgesehen sind und in den mit den Bezugszeichen 27 bezeichneten Bereichen eine Federung des Schabers mittels der Federelemente 9 ermöglicht ist.

Nicht in den Figuren dargestellt ist, dass der Förderbandabstreifer 1, insbesondere im Bereich des Schabers 7, bevorzugt im Bereich der Abdeckung 23, eine Rieselgutentfernung, insbesondere eine mechanische Rieselgutentfernung und/oder eine Rieselgutentfernung mittels Druckluft, bevorzugt ein Druckluftsystem zum Ausblasen des Bereichs 24 zwischen Schaber 7 und Gurtband aufweist.

Weiterhin ist in den Figuren nicht eine Förderanlage umfassend, ein Gurtband, zumindest eine sich um eine Trommelachse drehende Gurttrommel, sowie einen Förderbandabstreifer 1 dargestellt, bei dem der Schaber 7 und die Trommelachse einen horizontalen Abstand zueinander aufweisen, der dem Radius der Gurttrommel entspricht.

Darüber hinaus ist in den Figuren nicht dargestellt: ein Verfahren zur Reinigung eines Förderbandabstreifers 1, insbesondere eines Förderbandabstreifers 1, wobei mittels eines manuellen Auslösens und/oder einem definiertem Zeitintervall und/oder einer Sensorik ein auf einer Verunreinigung des Förderbandabstreifers 1 basierender Betriebszustand des Förderers detektiert wird und mittels einer Steuerungselektronik ein, insbesondere von Druckluftsystemen gestützter, Reinigungsprozess des Förderbandabstreifers 1 initiiert wird, wobei bevorzugt ein Schaber 7 automatisiert, insbesondere mittels einer automatischen Verstell-Einheit 20, von einer Betriebsposition in eine Reinigungsposition, insbesondere eine Position entfernt von dem Gurtband, verschwenkt, insbesondere von dem Förderer abgeschwenkt, wird, wobei Verunreinigungen und/oder Materialanhaftungen am Gurtband insbesondere in einer Reinigungsposition mittels Druckluft und/oder mechanisch gelöst werden.

### Bezugszeichenliste

- 1: Förderbandabstreifer
- 2: Trägerleiste
- 3: Laufrichtung des Gurtbandes
- 4: Haltemittel
- 5: erste Lagerstelle
- 6: zweite Lagerstelle
- 7: Schaber
- 8: Lagerachse
- 9: Federelement
- 10: Schwenkachse
- 11: erstes Haltemittelelement
- 12: zweites Haltemittelelement
- 13: erste Seite des Förderers/Förderbandabstreifers
- 14: zweite Seite des Förderers/Förderbandabstreifers
- 15: Schaberaufnahme
- 16: Federelementaufnahme
- 17: Arretierungsvorrichtung
- 18: Bedienelement
- 19: Riegelbolzen
- 20: Verstell-Einheit
- 21: Kontaktbereich zwischen Schaber und Gurtband
- 22: Abstreiferklinge
- 23: Abdeckung
- 24: Bereichs zwischen Schaber und Gurtband
- 25: Schraubverbindungen
- 26: erster Bereich
- 27: zweiter Bereich
- 28: dritter Bereich

## Patentansprüche

1. Förderbandabstreifer (1) für einen Förderer mit Gurtband, der Förderbandabstreifer (1) umfassend:
eine Trägerleiste (2), wobei die Trägerleiste (2) quer zu der Laufrichtung des Gurtbandes (3) angeordnet ist,
ein Haltemittel (4) zur Befestigung und/oder Lagerung der Trägerleiste (2) an dem Förderer, wobei das Haltemittel (4) zur Lagerung der Trägerleiste (2) wenigstens eine erste Lagerstelle (5) und wenigstens eine zweite Lagerstelle (6) umfasst,
einen Schaber (7),
wobei der Schaber (7) an der Trägerleiste (2) angeordnet ist,
wobei der Schaber (7) quer zu der Laufrichtung des Gurtbandes (3) verläuft,
wobei der Schaber (7) an einer Lagerachse (8) federnd gelagert ist,
wobei die Lagerachse (8) an der Trägerleiste (2) angeordnet ist,
wobei der Schaber (7) in einer Betriebsposition,
insbesondere zur Entkopplung des Schabers (7) von dem Gurtband,
bevorzugt mittels einer von wenigstens einem Federelement (9) bereit gestellten Federkraft,
federnd an das Gurtband angedrückt ist,
**dadurch gekennzeichnet, dass**
die Lagerstellen (5, 6) eine parallel zu der Trägerleiste
(2) verlaufende Schwenkachse (10) bilden,
wobei die Trägerleiste (2) um die Schwenkachse (10) derart schwenkbar ist, sodass der Schaber (7) in einer Reinigungsposition außer Eingriff mit dem Gurtband steht.

2. Förderbandabstreifer (1) nach Anspruch 1,
**dadurch gekennzeichnet, dass**
das Haltemittel (4) ein erstes Haltemittelelement (11), sowie ein zweites Haltemittelelement (12) umfasst,
wobei das erste Haltemittelelement (11) die erste Lagerstelle (5) ausbildet und das zweite Haltemittelelement (12) die zweite Lagerstelle (6) ausbildet,
wobei das erste Haltemittelelement (11) an einer ersten Seite des Förderers (13) montierbar ausgebildet ist und das zweite Haltemittelelement (12) an einer zweiten Seite des Förderers (14) montierbar ausgebildet ist.

3. Förderbandabstreifer (1) nach einem der vorangehenden Ansprüche,
**dadurch gekennzeichnet, dass**
der Schaber (7) eine Schaberaufnahme (15) umfasst und die Trägerleiste (2) eine Federelementaufnahme (16) umfasst,
wobei die Schaberaufnahme (15) mittels des Federelements (9) beweglich und/oder gefedert an der Federelementaufnahme (16) angeordnet ist.

4. Förderbandabstreifer (1) nach einem der vorangehenden Ansprüche,
**dadurch gekennzeichnet, dass**
der Schaber (7),
insbesondere in Reinigungsposition und/oder in Betriebsposition,
bevorzugt mittels einer Arretierungsvorrichtung (17),
arretierbar ausgebildet ist,
wobei insbesondere die Arretierungsvorrichtung (17) mittels eines,
bevorzugt werkzeuglos zu bedienenden, Bedienelements (18),
insbesondere eines Riegelbolzens (19), zu öffnen und/oder zu schließen ist.

5. Förderbandabstreifer (1) nach einem der vorangehenden Ansprüche,
**dadurch gekennzeichnet, dass**
die Lagerachse (8) und die Schwenkachse (10),
insbesondere horizontal und/oder vertikal, zueinander beabstandet ausgebildet sind.

6. Förderbandabstreifer (1) nach einem der vorangehenden Ansprüche,
**dadurch gekennzeichnet, dass**
wenigstens eine Lagerstelle (5, 6) eine Verstell-Einheit (20) aufweist,
wobei der Schaber (7),
insbesondere stufenlos,
mittels der Verstell-Einheit (20),
bevorzugt zwischen der Betriebsposition und der Reinigungsposition,
verschwenkbar ist,
wobei die Verstell-Einheit (20) manuell oder automatisch,
insbesondere mechanisch und/oder pneumatisch und/oder elektro-mechanisch,
ausgebildet ist und
wobei die Verstell-Einheit (20) insbesondere die Arretierungsvorrichtung (17) umfasst,
wobei die Verstell-Einheit (20) insbesondere außerhalb des Förderers angeordnet ist.

7. Förderbandabstreifer (1) nach einem der vorangehenden Ansprüche,
**dadurch gekennzeichnet, dass**
der Schaber (7) in einem Kontaktbereich (21) zwischen dem Schaber (7) und dem Gurtband eine einteilige und/oder durchgängige und/oder austauschbare,
insbesondere verschleißarme,
bevorzugt verschleißfreie,
Abstreiferklinge (22) aufweist.

8. Förderbandabstreifer (1) nach einem der vorangehenden Ansprüche,
**dadurch gekennzeichnet, dass**
der Schaber (7) eine,
insbesondere gewölbte und/oder geknickte,
bevorzugt oberhalb der Trägerleiste (2) angeordnete,
Abdeckung (23) umfasst,
wobei die Abdeckung (23) dazu ausgebildet ist, den Förderbandabstreifer (1),
zumindest teilweise,
insbesondere vollständig,
gegenüber von dem Gurtband herabfallenden Rieselgut abzuschirmen.

9. Förderbandabstreifer (1) nach einem der vorangehenden Ansprüche,
**dadurch gekennzeichnet, dass**
der Schaber (7) eine Schaberbreite zwischen 500 mm und 3100 mm,
insbesondere zwischen 600 mm und 3000 mm, aufweist und/oder der Schaber (7) zu der Lagerachse (8) beabstandet ist.

10. Förderbandabstreifer (1) nach einem der vorangehenden Ansprüche,
**dadurch gekennzeichnet, dass**
der Förderbandabstreifer (1),
insbesondere im Bereich des Schabers (7), bevorzugt im Bereich der Abdeckung (23),
eine Rieselgutentfernung,
insbesondere eine mechanische Rieselgutentfernung und/oder eine Rieselgutentfernung mittels Druckluft,
bevorzugt ein Druckluftsystem zum Ausblasen des Bereichs (24) zwischen Schaber (7) und Gurtband. aufweist.

11. Förderbandabstreifer (1) nach einem der vorangehenden Ansprüche,
**dadurch gekennzeichnet, dass**
die Elemente des Förderbandabstreifers,
insbesondere der Schaber (7), die Trägerleiste (2), das Haltemittel (4), die Abdeckung (23), die Abstreiferklinge (22),
voneinander,
insbesondere mittels Schraubverbindungen (25), lösbar und/oder modular zueinander,
ausgebildet sind.

12. Förderbandabstreifer (1) nach einem der vorangehenden Ansprüche,
**dadurch gekennzeichnet, dass**
das Federelement (9) zur Bereitstellung einer
insbesondere variablen,
bevorzugt mittels einer segmentierten Anordnung des Federelements (9),
mittels des Schabers (7) in Betriebsposition auf das Gurtband wirkenden Vorspannung ausgebildet sind,
wobei bevorzugt die Vorspannung mittels stufenloser Verstellung der Verstell-Einheit (20) einstellbar ist,
wobei insbesondere die Vorspannung bei einer Auslenkung des Schabers (7) von 5° aus einer Ausgangslage,
insbesondere in die Betriebsposition, ein Anpressgewicht von bevorzugt 10 kg je Meter der Schaberbreite beträgt.

13. Förderbandabstreifer (1) nach einem der vorangehenden Ansprüche,
**dadurch gekennzeichnet, dass**
das Federelement (9) durchgängig,
insbesondere mit einer Längsausdehnung quer zur Laufrichtung des Gurtbandes (3),
ausgebildet ist,
wobei insbesondere das Federelement (9) segmentiert zueinander angeordnet sind.

14. Förderbandabstreifer (1) nach einem der vorangehenden Ansprüche,
**dadurch gekennzeichnet, dass**
eine Bedienung des Förderbandabstreifers (1) und/oder eine Installation des Förderbandabstreifers (1),
insbesondere ein Anklappen des Schabers (7) von der Reinigungsposition in die Betriebsposition,
oder ein Abklappen des Schabers (7) von der Betriebsposition in die Reinigungsposition,
oder eine Verstellung der Verstell-Einheit (20),
von nur einer Seite (13, 14) des Förderers ermöglicht ist und insbesondere die Arretierungsvorrichtung (17) und/oder die Verstell-Einheit (20) an nur einer Seite des Förderbandabstreifers (5, 6) ausgebildet ist,
wobei insbesondere die Bedienung des Förderbandabstreifers (1) bis zu einer Gurtbreite von 2000 mm,
bevorzugt bis zu einer Gurtbreite von 2400 mm, ermöglicht ist.

15. Förderanlage umfassend,
ein Gurtband,
zumindest eine sich um eine Trommelachse drehende Gurttrommel,
sowie einen Förderbandabstreifer (1) nach einem der vorausgehenden Ansprüche.

16. Förderanlage nach Anspruch 9,
**dadurch gekennzeichnet, dass**
der Schaber (7) und die Trommelachse einen horizontalen Abstand zueinander aufweisen, der dem Radius der Gurttrommel entspricht.

17. Förderanlage nach wenigstens einem der Ansprüche 13 bis 14, **dadurch gekennzeichnet, dass**
ein Betrieb der Förderanlage mit einer Geschwindigkeit von bis zu 4 m/s,
insbesondere bis zu 6 m/s,
und/oder bevorzugt ein Einsatz der Förderanlage in einem Temperaturbereich zwischen -40 °C und +80 °C ermöglicht ist/sind.

18. Verfahren zur Reinigung eines Förderbandabstreifers (1), insbesondere eines Förderbandabstreifers (1) nach einem der vorangehenden Ansprüche,
**dadurch gekennzeichnet, dass**
mittels eines manuellen Auslösens und/oder einem definiertem Zeitintervall und/oder einer Sensorik ein auf einer Verunreinigung des Förderbandabstreifers (1) basierender Betriebszustand des Förderers detektiert wird und mittels einer Steuerungselektronik ein,
insbesondere von Druckluftsystemen gestützter, Reinigungsprozess des Förderbandabstreifers (1) initiiert wird,
wobei bevorzugt ein Schaber (7) automatisiert,
insbesondere mittels einer automatischen Verstell-Einheit (20),
von einer Betriebsposition in eine Reinigungsposition,
insbesondere eine Position entfernt von dem Gurtband,
verschwenkt,
insbesondere von dem Förderer abgeschwenkt, wird,
wobei Verunreinigungen und/oder
Materialanhaftungen am Gurtband insbesondere in einer Reinigungsposition mittels Druckluft und/oder mechanisch gelöst werden.
